Europäisches Patentamt

European Patent Office

Office européen des brevets

(11) Publication number: **0 281 265 B1**

# EUROPEAN PATENT SPECIFICATION

(45) Date of publication of patent specification: **05.08.92**

(51) Int. Cl.⁵: **C01F 7/02**, C01F 7/44, C04B 35/10

(21) Application number: **88301205.6**

(22) Date of filing: **12.02.88**

The file contains technical information submitted after the application was filed and not included in this specification

(54) **Process for preparing easily mono-dispersible alumina.**

(30) Priority: **26.02.87 JP 44613/87**
**13.03.87 JP 59165/87**

(43) Date of publication of application:
**07.09.88 Bulletin 88/36**

(45) Publication of the grant of the patent:
**05.08.92 Bulletin 92/32**

(84) Designated Contracting States:
**DE FR GB IT**

(56) References cited:
**EP-A- 263 810**
**EP-A- 277 730**
**EP-A- 0 116 436**
**DE-A- 3 032 382**

**CHEMICAL ABSTRACTS, vol. 106, no. 8, 16th February 1987, page 144, no. 52684c, Columbus, Ohio, US; && JP-A-61 127 619 (NIPPON LIGHT METAL CO., LTD) 14-06-1986**

(73) Proprietor: **SUMITOMO CHEMICAL COMPANY, LIMITED**
**Kitahama 4-chome 5-33**
**Chuo-ku Osaka 541(JP)**

(72) Inventor: **Harato, Takuo**
**37-13, Nishioizumi-1-chome**
**Nerima-ku Tokyo(JP)**
Inventor: **Furubayashi, Toshiki**
**2-126, Ikkucho-2-chome**
**Niihama-shi(JP)**
Inventor: **Ashitani, Toshio**
**5-32,Kikumotocho-1-chome**
**Niihama-shi(JP)**
Inventor: **Ogawa, Toru**
**2-241, Ikkucho-2-chome**
**Niihama-shi(JP)**

(74) Representative: **Goldin, Douglas Michael et al**
**J.A. KEMP & CO. 14, South Square Gray's Inn**
**London WC1R 5EU(GB)**

# EP 0 281 265 B1

## Description

The present invention relates to a process for preparing easily mono-dispersible alumina having a sharp particle size distribution.

Alumina powders are used as raw materials for various ceramic articles, abrasives, special refractories and the like.

In recent years, the technological progress is remarkable in the field of ceramics for electronic components such as IC substrates. And at the same time, the requirements in quality of alumina powders, as the raw materials for electronic components, are becoming severer.

It is said that the physical properties of the alumina powders as the raw materials noticeably affect the structural uniformity, productivity and yield of the final products, so that their improvement is particularly required.

For example, in order to obtain a sintered product having a uniform morphology and a high density at a low temperature, it is desirable to use a finely-divided alumina having a uniform activity of the particles. In other words, the alumina powders should have a narrow particle size distribution and be of the uniform shape.

Or, in order to obtain a molding having a high density, the alumina powders are usually used after mono-dispersing the agglomerates (secondary particles) of the calcined alumina powders to the constituents thereof (primary particles) or so. Therefore, a time needed for mono-dispersing the alumina powders is desired to be short, that is, the powders are easily mono-dispersible.

Or, in the case where the alumina powders are used as abrasives, they are also required to have a sharp particle size distribution, because with such abrasive, a high polishing speed and excellent surface finish without scratch can be achieved.

However, most of the alumina powders conventionally used for ceramics consists of agglomerates (secondary particles) of several to over a hundred $\mu m$, which result from the strong agglomeration of the primary particles of sub-microns to scores $\mu m$.

They are obtained by the calcination of aluminium hydroxide produced by the Bayer's process in a rotary kiln, a fluidised bed furnace, a tunnel furnace or the like.

DE-A-3032382 describes a process in which aluminium-trihydroxide (bayerite and/or nordstrandite) is pulverised to a degree of comminution of from 8 to 10 based on the average grain diameter and the comminuted material is heated to 620 to 700° C for 36 to 40 hours and slowly cooled.

European Application No. 8830502.7 (which was not published until after the filing date of the present application but which claims an earlier priority date) describes a process of mixing aluminium hydroxide and/or transition alumina with a dispersion medium, adjusting the viscosity of the resultant slurry, spray drying the slurry and calcining the resulting dry powders.

European Application No. 87890219.6 (which was published after the filing date of the present application but claims an earlier priority date) discloses a process in which a highly dispersed $\alpha$-aluminium oxide hydrate is stirred in a dilute acidic solvent, air is separated from the suspension by vacuum deaeration, agglomerates are disintegrated in a dispersing apparatus, large size particles are removed from the suspension if necessary and the suspension is then dried, pulverised and sintered at a temperature of 1000° C to 1500° C.

The conventionally used alumina powders need a long time to mono-disperse the same. In addition, they do not cleave along with the peripheries of the original particles but split into miscellaneously shaped $\alpha$-alumina fragments.

Consequently, these alumina powders are obliged to have a broad particle size distribution. And as a result they have a disadvantage that the activity of the particles becomes non-uniform.

Moreover, these aluminas have a flaky shape having a high aspect ratio and a trace of crystal form of their mother salt aluminium hydroxide.

In view of such circumstances, the present inventors made intensive studies in order to obtain an easily mono-dispersible alumina having, after the mono-dispersion thereof, a sharp particle size distribution and being of uniform shape to finally accomplish the present invention based on the following findings.

That is, according to the present invention, there is provided a process for preparing an easily mono-dispersible alumina characterised by comprising:

(a) applying a mechanical impact to (i) an aluminium hydroxide having an average secondary particle diameter of about 10 $\mu m$ or less produced by the Bayer's process and/or (ii) a transition alumina having an average secondary particle diameter of about 10 $\mu m$ or less produced by the Bayer's process to obtain a pulverised powder, wherein the applied mechanical impact is such that the peak intensity of X-ray diffraction at (110) crystal face of the pulverised powder is reduced by about 5 % or more after the

2

pulverisation;

(b) dispersing the pulverised powder into aqueous solution to form a slurry;

(c) adjusting the viscosity of the slurry to 100 to 1,000 centipoises;

(d) spray drying the viscosity-adjusted slurry to obtain a dried powder; and

(e) calcining the dried powder at 1,100° to 1,500° C.

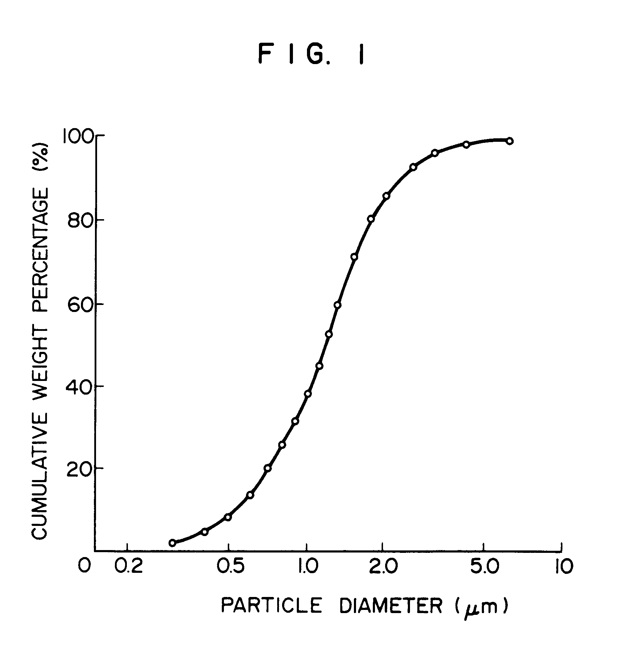

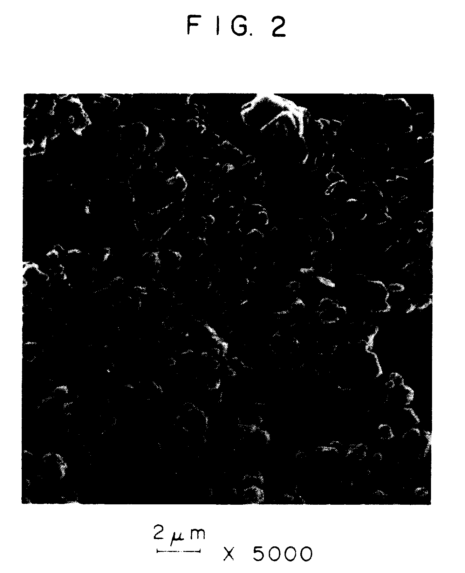

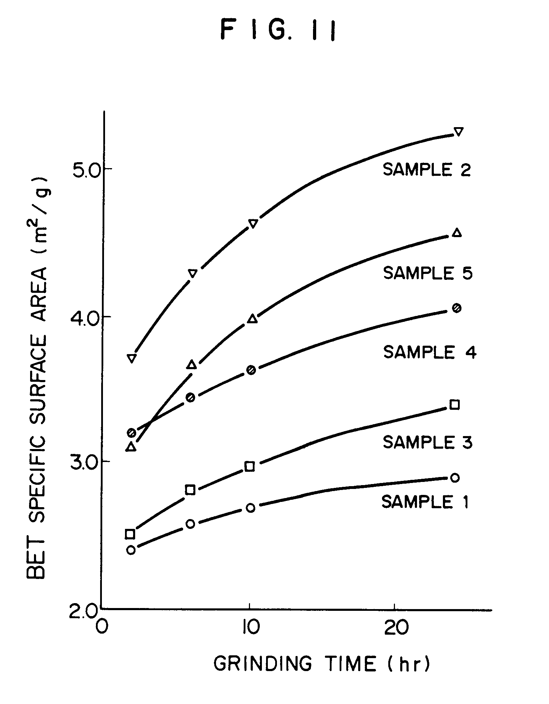

Figures 1, 3, 5, 7 and 9 show the particle size distributions of aluminium hydroxide powder or alumina powder. Figures 2, 4, 6, 8 and 10 are the scanning electron micrographs of aluminium hydroxide powders or alumina powders. Figure 11 shows the relationship between the ball-milling periods and the BET specific surface areas of the particles resulted from the ball-milling of the alumina powders with respect to the differences in their aspect ratios.

In the present invention, usable are aluminium hydroxide and/or a transition alumina (hereinafter referred to as the material powder) having an average secondary particle diameter of about 10 $\mu$m or less, preferably about 8 $\mu$m or less, more preferably about 5 $\mu$m or less produced by the Bayer's process.

The transition alumina used in the present invention includes intermediate aluminas having $\chi$-, $x$-, $\theta$-, $\rho$-, $\delta$- or $\gamma$-crystal form before the phase transition to the $\alpha$-crystal form obtained by drying and/or calcining aluminum hydroxide. Specific examples thereof are a transition alumina having an ignition loss of about 0.5 to about 15% by weight industrially obtained by contacting aluminum hydroxide produced by the Bayer's process with hot gas at about 400° to about 1,200° C for about 0.1 to 10 seconds, that obtained by heating aluminum hydroxide under a reduced pressure at about 250° to about 900° C for, generally, 1 minute to 4 hours and the like.

When the average secondary particle diameter is larger than 10 $\mu$m, the particle size of the $\alpha$-alumina obtained by the calcination naturally becomes large.

The material powder having a large average secondary particle diameter usually contains far more number of primary particles having a large particle diameter in the secondary particles than that having a small average secondary particle diameter. And since these large primary particles unite together at the joining point of the crystal face to form larger $\alpha$-crystals, there occur unevenness of the shape and broadening of the particle size distribution.

In addition, soda was unavoidably contained in the material powder obtained by the Bayer's process and it accelerates the fusion-growth of the primary particles to further broaden the particle size distribution. Therefore, the above-mentioned phenomena are not desired.

Means for applying a mechanical impact to the material powder is not critical provided it can apply the impact on said material powder as uniformly as possible. In the present invention, any conventional pulverizers utilizing a pulverizing medium such as attritor, ball mill and the like are usable.

As the pulverizing medium, there may be used alumina balls having a diameter of 1-50 mm, preferably 2-30 mm, more preferably 2-5 mm.

Among the pulverizing means utilizing a pulverizing medium, both dry process and wet process are adoptable. However, the wet process is preferred because it can give the mechanical impact more uniformly on the material powder than the dry process.

The extent of the mechanical impact applied by the pulverizer to the material powder is variable depending on the physical properties of the material powder, the type and volume of the pulverizer, the type and amount of the pulverizing medium in the pulverizer, the process conditions of the pulverizer such as the number of the rotation and the like, so that it cannot be described simply. However, in the present invention, the extent of the applied impact is such that the peak intensity of X-ray diffraction at (110) crystal face of the powder suffered from the pulverization is reduced by 5% or more (retention of 95% or less), preferably by 10% or more (retention of 90% or less) relative to the peak intensity of the powder before the pulverization as 100%. Selecting the type of pulverizer, those who are skilled in the art can easily determine the process conditions by a preparatory experiment.

For example, in the case where the mechanical impact is applied to material aluminum hydroxide (gibbsite) having an average secondary particle diameter of 1.4 - 1.0 $\mu$m by an attritor having a volume of about 5 liters which is impregnated with about 8 kg of alumina balls having a diameter of 2 - 5 mm, it may usually take one hour or more, preferably 3 - 24 hours.

If the extent of the impact applied to the material powder is too small, there cannot be obtained an easily mono-dispersible alumina having a sharp particle size distribution and being of the uniform shape by succeeding calcination.

On the other hand, beyond a certain pulverization time there is no further improvement in the pulverizing effect, so that the pulverization time may be determined from the viewpoint of the cost-effectiveness.

Thus obtained pulverised powder is subjected to a calcination as such or after drying.

An easily mono-dispersible alumina having a sharp particle size distribution and having particles of an extremely uniform shape, is obtained by the calcination of the dried powder after the drying step, comprising disperse-mixing the pulverised powder into an aqueous solution to form a slurry, adjusting the viscosity thereof to 100 to 1,000 centipoises and spray drying the resulting slurry.

The amount of the material powder to be disperse-mixed into an aqueous solution cannot be simply determined since it depends on the succeeding spray drying conditions. However, it may be usually about 200 g/ℓ to about 2,000 g/ℓ, preferably about 600 g/ℓ to 1,200 g/ℓ.

Means for disperse-mixing the pulverized powder into an aqueous solution is not critical provided it can uniformly disperse the powder into an aqueous solution. For example, the dispersion can be accomplished by mechanical agitation using a stirrer or by wet process using a ball mill, attritor or the like. Among these, the wet process is preferred.

When the wet process is adopted, the viscosity of the slurry, which depends on whether a dispersing agent is added thereto or not, is usually about several 10 centipoises or less, so that the slurry in which the pulverized powder is dispersed may be adjusted to a viscosity of 100 centipoises to about 1,000 centipoises, preferably 200 centipoises to 800 centipoises before the spray drying.

When the viscosity of the slurry is lower than the above-mentioned range, it tends to be difficult to obtain an alumina having a sharp particle size distribution and being of the uniform shape by spray drying the slurry followed by calcining the spray-dried granular powder.

On the other hand, when the viscosity is higher than the above-mentioned range, uniform drops tend not to be formed in the spray drying. And as the result, it tends to be difficult to obtain an intended alumina powder having a sharp particle size distribution.

Means for adjusting the viscosity is not critical provided it has no possibility of causing serious contamination on the alumina after the calcination. Specific examples of the additives used for adjusting the viscosity are an aqueous ammonia; binders such as polyvinyl alcohol, carboxymethyl cellulose, methyl cellulose, acrylic resins, and the like used in the shaping of alumina; chlorides or carbonates of calcium, magnesium or the like. Among these, it is recommended to use an aqueous ammonia and/or a binder such as polyvinyl alcohol and the like because they are burnt up during the calcination without leaving any ash in the alumina.

In addition, a binder such as polyvinyl alcohol and the like has an effect of increasing the recovery of the dried powder in a cyclone collector or the like after the spray drying.

For the spray drying, any means may be adopted including rotary disk method, pressurized nozzle method, two-phase flow nozzle method and the like. Of these, the rotary disk method is preferred since the spray-dried, granular powder having the most sharp particle size distribution is obtained.

Particle size range of the spray-dried, granular powder is not critical; however, average particle diameter of the spray-dried, granular powder usually falls in the range of from 20 to 200 μm.

The process conditions for obtaining the powder having an intended particle size depend on the type of spray dryer used; however, any skilled artisan can easily determine the conditions. For example, in the case of the rotary disk method, the intended particle size can be obtained by controlling the slurry concentration for spray drying, amount of the slurry supplied to the disk, disk revolution, gas flow rate and drying speed.

In the process of the present invention, it is preferable to carry out the calcination in the presence of a chlorine-containing substance.

There is no restriction on the type of the chlorine-containing substance used provided it evolves chlorine or hydrogen chloride during the calcination. Usually, chlorine compounds such as hydrochloric acid, chlorine gas, aluminum chloride, magnesium chloride, calcium chloride and the like, chlorine-containing macromolecular compounds and the like are usable. Among these, hydrochloric acid is preferable.

Specific examples of the chlorine-containing macromolecular compounds are homopolymers of vinyl chloride, copolymers of vinyl chloride with an unsaturated ethylenic monomer which is copolymerizable with vinyl chloride (including the graft copolymers and block copolymers), homopolymers of vinylidene chloride, copolymers of vinylidene chloride with an unsaturated ethylenic monomer which is copolymerizable with vinylidene chloride, and the like.

The amount of the chlorine-containing substance added cannot be determined unanimously because the optimum addition depends on the amount of chlorine or hydrogen chloride which the chlorine-containing substance possesses or evolves on pyrolysis. However, the chlorine-containing substance is usually added in an amount of 0.1 - 10%, preferably 1 - 5% in terms of the weight of chlorine based on the weight of alumina (dry basis) present in the material powder.

When the amount added is smaller than about 0.1% by weight, the effect of improving aspect ratio of the resulting powder is sometimes unsatisfactory. While, when the amount added exceeds about 10% by weight, the effect of improving aspect ratio hits the ceiling and a problem of corroding the equipment tends to occur. Moreover, when a chlorine-containing macromolecular compound is used in such a large amount, decomposition thereof during the calcination tends to leave an increased amount of carbon in the alumina that lowers the purity thereof.

As the method for carrying out the calcination in the presence of the chlorine-containing substance, there can be adopted a method comprising admixing the chlorine-containing substance with the aqueous dispersion of aluminum hydroxide before the spray drying, a method comprising admixing the chlorine-containing substance with the spray-dried powder, a method comprising introducing the chlorine-containing substance into a calcining furnace at the calcination to make it contact with the aluminum hydroxide and/or a transition alumina. These methods can be applied alone or in the combination thereof.

When the aluminum hydroxide and/or a transition alumina contain soda components, the presence of the chlorine-containing substance during the calcination naturally shows, other than the above-mentioned effects, the effect of eliminating the soda components therefrom.

Even when no chlorine-containing substance is added and another soda-eliminating agent such as sodium fluoride and the like is used or sodium fluoride and the like is used with a siliceous substance, the soda-eliminating effect can be achieved. However, in such cases, it tends to be difficult to obtain a low-soda alumina having a small aspect ratio and a sharp particle size distribution.

In the case where the soda content in the material powder is high, a siliceous substance may be added thereto at the calcination in order to reduce the soda content.

Specific examples of such siliceous substance are silica stone, quartz, silica sand, chamotte, mulite, sillimanite, magnesium silicate, aluminum silicate and the like.

The way of using such siliceous substances varies with the type of the calcining furnace employed.

In the case where a tunnel furnace is employed for the calcination, saggers made of such a sliceous substance may be used in the furnace. Or balls made of such a siliceous substance having a diameter of about 5 - 10 mm may be added in saggers.

In the case where a rotary kiln is employed, it may be best suited to add either smaller balls than the above-mentioned ones made of the siliceous substance or silica sand.

In these cases, the siliceous substance absorbs the soda generated during the calcination of the pulverized powder or spray-dried powder to promote the reduction of the soda content.

In these cases, the amount of the siliceous substance to be added thereto are about 1% or more, preferably 5 - 10% in terms of the weight of silica based on that of alumina (dry basis).

In the process of the present invention, optimum conditions of the calcination vary with the type of calcining furnace employed and hence cannot be determined unanimously. However, the calcination is usually carried out at 1,100° to 1,500°C.

Retention time for the calcination varies with the type of the calcination furnace. In the case where a fluidized bed furnace or a flash roaster type furnace is employed, the retention time at a temperature in the above-mentioned range is usually from several minutes to scores of minutes. Whereas in the case where a tunnel furnace is employed, it is usually several hours.

The calcination temperature and retention time are properly chosen according to the intended particle size of the product $\alpha$-alumina. Naturally, the longer the retention time and the higher the temperature, the greater the particle size of the resulting $\alpha$-alumina.

The type and structure of the calcination furnace employed are not critical provided the above-mentioned calcination temperature and retention time are secured. Specific examples of the adoptable furnace are rotary kilns, roller hearth kilns, tunnel furnaces, pneumatic conveying furnaces, fluidized bed furnaces, flash roaster type furnaces, electric furnaces and the other known furnaces.

The thus calcined alumina powder is cooled and, if necessary, sieved in order to remove the siliceous substance to obtain an easily mono-dispersible alumina having a sharp particle size distribution and a small primary particle diameter after the mono-dispersing. When the calcination is carried out in the presence of the chlorine-containing substance, the calcined alumina powder has a small aspect ratio in addition to the above advantages.

The reason why the process of the present invention provides an easily mono-dispersible alumina having a sharp particle size distribution is not clear; however, it may be explained as below.

In a conventional process, aluminum hydroxide particles are deposited from a solution, separated from the liquid by decantation, filtration or the like and dried. During the course of these steps, the particles agglomerate and match each other in the crystal surface of the primary particle. This grows as the $\alpha$-crystals with calcination and causes a coarsening of the particles and a broadening of the particle size distribution.

Compared with this, the process of the present invention is considered to provide an easily mono-dispersible, finely-divided α-alumina having a sharp particle size distribution and being of the uniform shape from the following mechanisms:

(1) Since the average secondary particle diameter of the material powder is restricted to a specific range, the use of the material powder having an extraordinarily large primary particle diameter is inhibited and, as the result, the particle size distribution of the final product, which is affected by the average secondary particle diameter of the material powder, can be narrowed.

(2) By the mechanical impact given on the material powder, the activation energy is intentionally concentrated to the surface of the particles to make it a crystalline nucleus of the α-crystal generation at the calcination step. As the results, the number of the crystalline nucleus generation to α-alumina is remarkably increased and the α-crystal growth from the joining of neighboring particles is prevented.

(3) The unevenness of the surface of the pulverized powder due to the given mechanical impact converts almost all the primary particles constituting the agglomerates to α-crystal without the fusion-growth of the neighboring primary particles.

Moreover, in the case where the spray drying method comprising dispersing the material powder into an aqueous solution to form a slurry followed by the instant spray drying of the slurry is adopted, the agglomeration of the primary particle of the dried powder obtained is prevented and after the calcination, the α-crystal growth by the joining of the particles is rarely seen.

In addition, in the case where the calcination is carried out in the presence of the chlorine-containing substance, it accelerates the C-axial growth of the alumina during the calcination, and as the results, there can be obtained an α-alumina having a small aspect ratio and a sharp particle size distribution and being of the uniform shape.

As described in detail as above, the process of the present invention can provide an easily mono-dispersible α-alumina which gives by a simple powdering (mono-dispersing) a finely-divided alumina powder usually having an average secondary particle diameter of 2 or 3 $\mu$m or less and a sharp particle size distribution. By molding and sintering the same, there can be obtained a sintered product having a uniform structure, a high density and a high strength. This sintered product is fitted for various ceramic applications including unprecedented ceramics for electronic purpose, abrasive applications, high-grade refractory applications and the like so that it has a noticeable value in industry.

The present invention is illustrated in more detail with reference to the following Examples and Comparative Examples; however, these are intended to merely show the embodiments of the process of the present invention and not to be interpreted to limit the scope of the present invention.

In the Examples and Comparative Examples, measurements are made in terms of $Na_2O$ concentrations in mono-dispersed alumina powders, particle sizes thereof at 5%-, 50%- and 90%-cumulative weights and the densities of the sintered product samples prepared by compression-molding 3 g of a each of those alumina powders in a mold having a diameter of 20 mm by applying a hydrostatic pressure of 1 ton followed by sintering the resulting pressed molding at 1,600°C for 2 hours. The results are shown in Table 1.

In addition, certain alumina powders obtained in the Examples and Comparative Examples were ground under the same prescribed conditions and the changes of BET specific surface areas of the ground powders brought about by the grinding period were measured to evaluate the aspect ratios of the powders, since the aspect ratios of fine particles having an average particle diameter of 1 $\mu$m or so cannot be known quantitatively but sensually from the scanning electron micrographs of the particles. This idea is based on the experimental facts that flaky α-alumina crystals (that having a large aspect ratios) are readily split on grinding and hence the BET specific surface area thereof increases quickly with an increase in grinding period, whereas α-alumina crystals having small aspect ratios, on the contrary, are hard to split and hence the BET specific surface area thereof increase gradually with an increase in grinding period.

The particle sizes in Examples and Comparative Examples are measured with a sidigraph.

The viscosity of slurry was measured by a B-type viscometer (mfd. by Tokyo Keiki Co., Ltd.) using No. 2 rotor of 30 r.p.m. at a room temperature.

Example 1

1.8 kg of aluminum hydroxide having a soda content (as $Na_2O$) of 0.2% by weight, a particle size distribution as shown in Figure 1 and a particle diameter as shown in the scanning electron micrograph of Figure 2 produced by the Bayer's process and 1.9 liters of water were charged into an attritor (mfd. by Mitsui-Miike Kakoki Co., Ltd.) having a volume of 4.9 liters with 8.5 kg of alumina balls having a diameter of 2 mm as pulverizing media and the pulverization was carried out for 24 hours.

After the pulverization, aluminum hydroxide was subjected to a dehydration. Then it was subjected to an X-ray difraction measurement and the results was that the peak intensity at (110) crystal face was reduced down to 79% based on that before the pulverization as 100%.

Then, 1,800 g of this attritor-treated aluminum hydroxide were dispersed into 2,450 cc of water combined with 360 cc of 10% aqueous solution of hydrochloric acid. Further, 180 g of 10% aqueous solution of polyvinyl alcohol (PVA 205® mfd. by Kuraray Co., Ltd.) were added thereto. Then, 30 ml of 25% aqueous ammonia were added thereto in order to adjust the viscosity of the slurry to 200 centipoises.

The thus obtained slurry was flash-dried by means of a rotating disk type dryer (Type MM mfd. by A/S NIRO ATOMIZER, Denmark) under the conditions of the slurry feed rate of 2 ℓ/hr, the slurry concentration of 677 g/ℓ, the number of the disk revolution of 10,000 r.p.m. and the drying temperature of 110°C to obtain a flash-dried powder having an average particle diameter of 30 $\mu$m.

Then the powder was charged in mullite saggers and was calcined in a box type electric furnace at 1,300°C for 2 hours and ball-milled for 2 hours to obtain a mono-dispersed alumina powder.

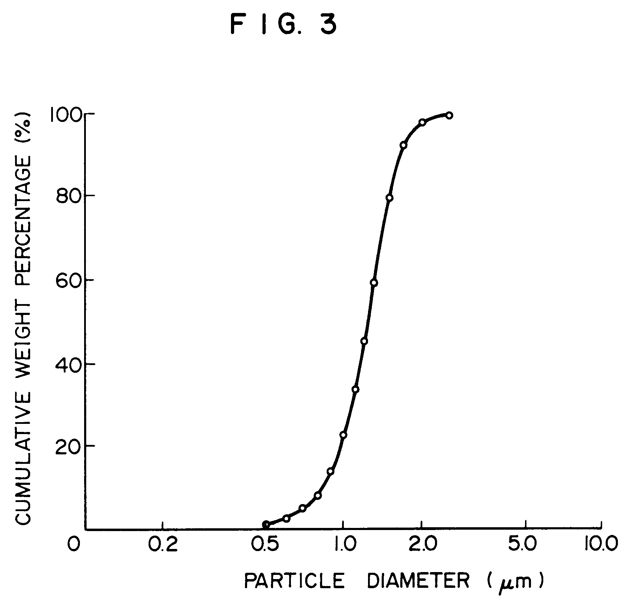

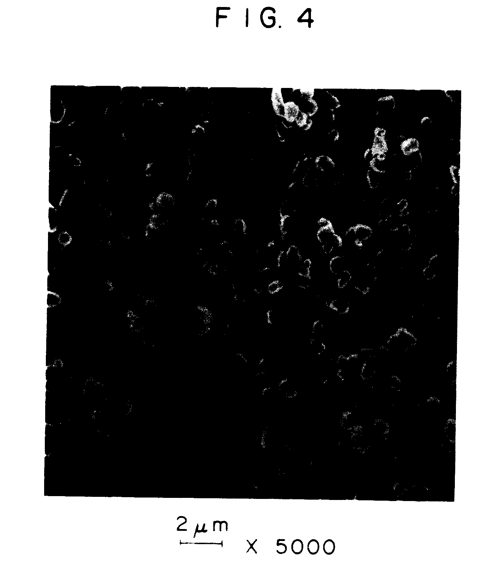

The particle size distribution of the mono-dispersed alumina powder is shown in Figure 3 and the scanning electron micrograph of the powder is shown as Figure 4.

Comparative Example 1

The same procedure as in Example 1 was repeated except that the attritor was not used.

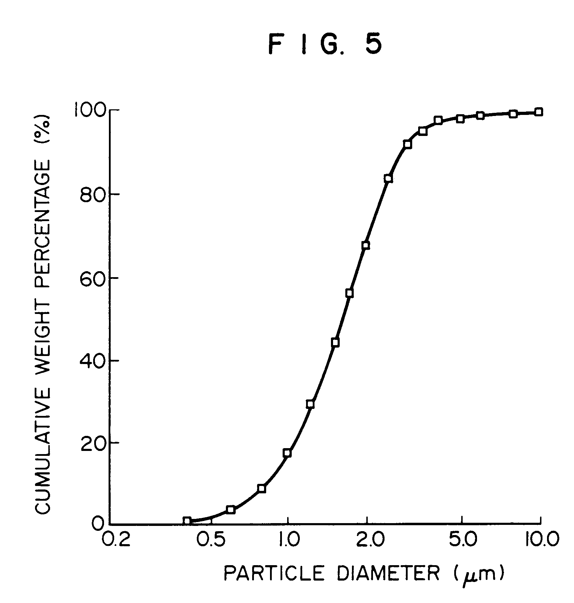

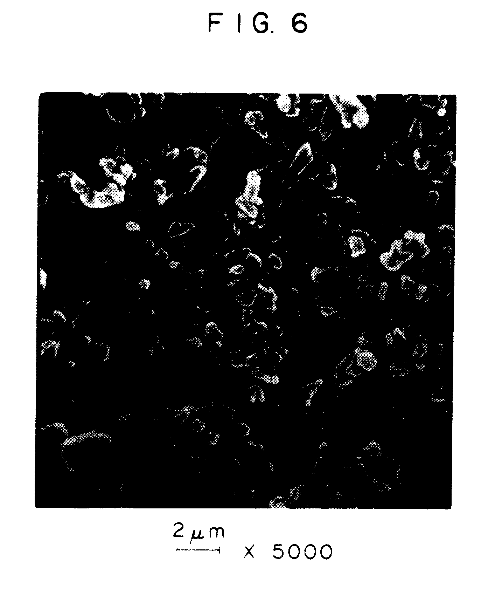

The particle size distribution of the dispersed aluminum powder of Comparative Example 1 was shown in Figure 5 and the scanning electron micrograph was shown as Figure 6.

Examples 2 and 3 and Comparative Example 2

The same procedure as in Example 1 was repeated except that the viscosity of the slurry was altered by adding polyvinyl alcohol and 25% aqueous ammonia in amounts shown in Table 1.

The physical properties of the mono-dispersed alumina powders are shown in Table 1.

Example 4

The same aluminum hydroxide as in Example 1 was preparatorily calcined at 500°C for 4 hours. The preparatorily calcined alumina thus obtained had an ignition loss of 10% by weight and the crystal structure thereof was regarded as being constituted of gibbsite as the main structure, boehmite, $\gamma$-alumina and $\chi$-alumina from the information of X-ray diffraction. This preparatorily calcined alumina was subjected to the same attritor treatment as in Example 1 to obtain a pulverized alumina. The peak intensity of X-ray diffraction at (110) crystal face of this pulverized alumina was reduced down to 92% relative to that before the pulverization as 100%. This pulverized alumina was dispersed into water to form a slurry and the viscosity of the slurry was adjusted.

The slurry was treated in the same manner as in Example 1 to obtain a mono-dispersed alumina having a low-soda content. The physical properties thereof are shown in Table 1.

Example 5

In the procedure in Example 1, the time for attritor-treatment was changed to 6 hours. After the pulverization, this aluminum hydroxide was dehydrated and was subjected to an X-ray diffraction measurement to find that the peak intensity at (110) crystal face was reduced down to 90% based on that before the pulverization as 100%.

Then the same procedure as in Example 1 was applied to this pulverized alumina to obtain a mono-dispersed alumina powder.

The physical properties thereof are shown in Table 1.

Example 6

The same procedure as in Example 1 was repeated except that the calcination temperature was changed to 1,250°C.

The physical properties of the mono-dispersed alumina powder obtained are shown in Table 1.

Comparative Example 3

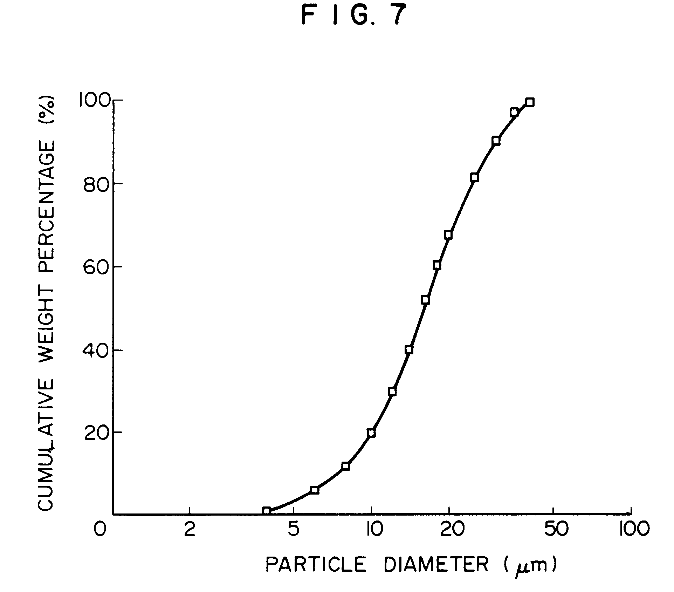

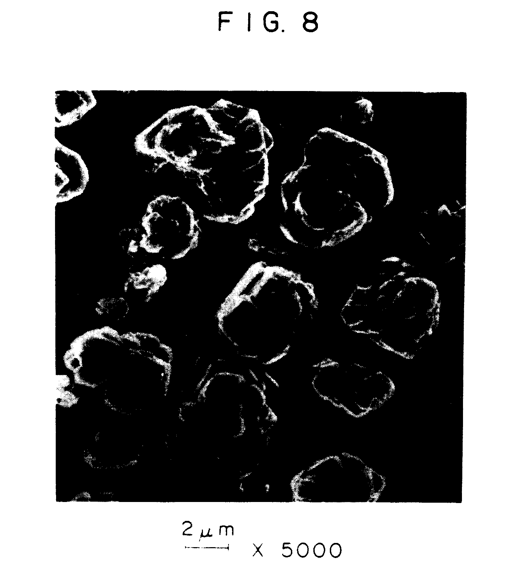

The same procedure as in Example 1 was repeated except that an aluminum hydroxide having a soda-content of 0.2% by weight (as $Na_2O$), a particle size distribution shown in Figure 7, a scanning electron micrograph shown as Figure 8 and an average secondary particle diameter of 15 $\mu$m produced by the Bayer's process was used as the material powder to obtain a non-dispersed alumina powder.

The peak intensity of X-ray diffraction at (110) crystal face of the attritor-treated aluminum hydroxide was reduced down to 48% relative to that before the pulverization as 100%.

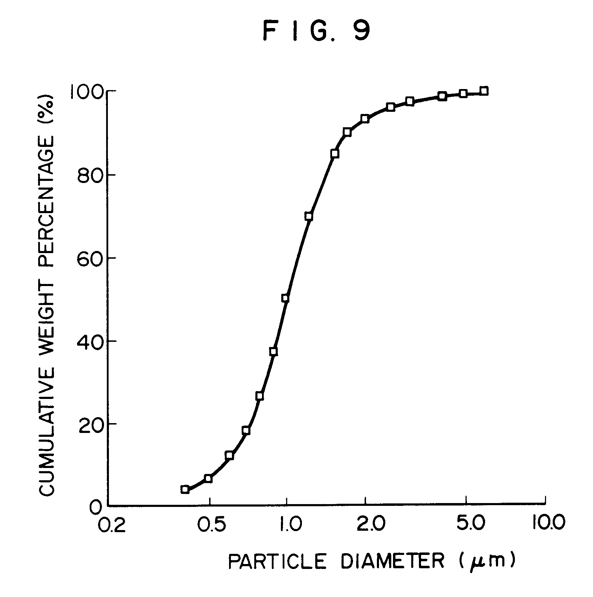

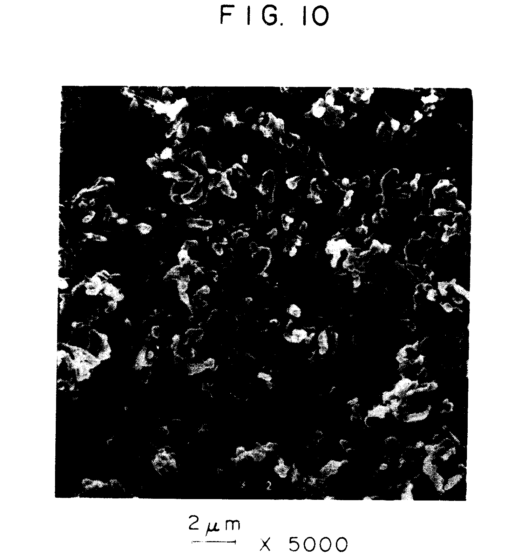

The particle size distribution and scanning electron micrograph of the thus obtained, dispersed alumina powder are shown in Figures 9 and 10, respectively.

Comparative Example 4

The same procedure as in Example 1 was repeated without carrying out the attritor-treatment, addition of hydrochloric acid, adjustment of viscosity and spray drying.

The physical properties of the dispersed alumina powder obtained are shown in Table 1.

Comparative Example 5

A slurry was obtained by the same procedure as in Example 1 without carrying out the adjustment of viscosity and spray-drying. The slurry was filtered, dried in an air-bath at 110°C for 2 hours, charged in mullite saggers and calcined as in Example 1.

The physical properties of the mono-dispersed alumina powder obtained are shown in Table 1.

Comparative Example 6

The same procedure as in Example 1 was repeated without carrying out the attritor-treatment.

The physical properties of the dispersed alumina powder obtained are shown in Table 1.

Comparative Example 7

A slurry was obtained by the same procedure as in Example 4 without carrying out the adjustment of viscosity and spray drying. Then the slurry was subjected to a filtration, a drying in an air-bath at 110°C for 2 hours and a calcination in the mullite saggers as in Example 1.

The physical properties of the mono-dispersed alumina powder obtained are shown in Table 1.

Comparative Example 8

The same aluminum hydroxide as in Example 1 was preparatorily calcined at 500°C for 4 hours. The preparatorily calcined alumina thus obtained had an ignition loss of 10% by weight and the crystal structure thereof was regarded as being constituted of gibbsite as the main structure, boehmite, $\gamma$-alumina, $\chi$-alumina from the information of X-ray diffraction. It was subjected to the same attritor treatment as in Example 1 to obtain a pulverized alumina. The peak intensity of X-ray diffraction at (110) crystal face of this pulverized alumina was reduced down to 92% relative to that before the pulverization as 100%. Then the pulverized alumina was filtrated and dried in an air-bath at 110°C for 2 hours to obtain a dried alumina.

To 100 parts by weight of this dried alumina were added 2.0 parts by weight of a powdery polyvinyl chloride resin (trade-named as Sumilit® mfd. by Sumitomo Chemical Co., Ltd.) and 5.0 parts by weight of quartz having an average particle diameter of 2 mm and they were stirred so that they were uniformly get mixed. Then the mixture was calcined in a box type electric furnace at 1,300°C for 2 hours and thereafter further ball-milled for 2 hours to obtain an alumina powder.

The physical properties thereof are shown in Table 1.

Comparative Example 9

The same procedure as in Comparative Example 8 was repeated except that the attritor treatment was not carried out to obtain an alumina powder.

The physical properties of the obtained alumina powder are shown in Table 1.

Table  1

| | 10% aqueous solution of HCl (ml) | 25% aqueous solution of polyvinyl alcohol (g) | 25% aqueous ammonia (ml) | Viscosity of slurry (cp) | Physical properties of mono-dispersed alumina powder | | | | Content of Na$_2$O (wt. %) |
|---|---|---|---|---|---|---|---|---|---|
| | | | | | Average secondary particle diameter (μm) | | | | |
| | | | | | $D_{50}$ | $D_5$ | $D_{95}$ | F.D | |
| Example 1 | 360 | 180 | 30 | 200 | 1.2 | 0.7 | 1.8 | 3.90 | 0.02 |
| "          2 | 360 | 180 | 43 | 500 | 1.4 | 0.7 | 2.0 | 3.84 | 0.02 |
| "          3 | 360 | 180 | 59 | 800 | 1.1 | 0.6 | 1.8 | 3.86 | 0.02 |
| "          4 | 360 | 180 | 35 | 200 | 1.3 | 0.7 | 1.9 | 3.88 | 0.02 |
| "          5 | 360 | 180 | 30 | 200 | 1.3 | 0.7 | 2.0 | 3.82 | 0.02 |
| "          6 | 360 | 180 | 30 | 200 | 0.9 | 0.5 | 1.3 | 3.91 | 0.02 |
| C.Ex.5  "  7 | 360 | – | – | – | 1.2 | 0.5 | 2.5 | 3.71 | 0.02 |
| C.Ex.7  "  8 | 360 | – | – | – | 1.2 | 0.5 | 2.3 | 3.70 | 0.02 |
| C.Ex.8  "  9 | PVC | – | – | – | 1.2 | 0.5 | 2.2 | 3.71 | 0.02 |

EP 0 281 265 B1

Table 1 (cont'd)

| | | | | | | | | | |
|---|---|---|---|---|---|---|---|---|---|
| Comparative Example 1 | 360 | 180 | 30 | 200 | 1.6 | 0.7 | 3.4 | 3.23 | 0.02 |
| " 2 | 360 | 180 | 68 | 1200* | 1.4 | 0.6 | 2.2 | 3.76 | 0.02 |
| " 3 | 360 | 180 | 30 | 200 | 1.0 | 0.5 | 2.2 | 3.50 | 0.02 |
| " 4 | – | – | – | – | 1.1 | 0.4 | 3.3 | 3.18 | 0.12 |
| " 5 | 360 | 180 | 30 | 200 | 1.5 | 0.7 | 3.2 | 3.36 | 0.02 |
| " 6 | PVC | – | – | – | 1.4 | 0.5 | 3.3 | 3.17 | 0.02 |

Note: $D_5$: particle diameter at 5%-cumulative weight (μm)

$D_{50}$: particle diameter at 50%-cumulative weight (μm)

$D_{95}$: particle diameter at 95%-cumulative weight (μm)

F.D.: sintered density (g/cm³)

*: The slurry adjusted to the viscosity of 1,200 centipoises gave a markedly low yield of dried granular powder in spray-drying.

C.Ex.: Comparative Example.

## Example 7

In order to compare the aspect ratios of the powders, the ball-milling times and BET specific surface areas of the following powders are measured. The results are shown in Figure 11.

Sample 1: The alumina powder obtained in Example 1

10

Sample 2: The alumina powder obtained by the same procedure as in Example 1 except that hydrochloric acid was not added to the dispersion in which aluminum hydroxide was dispersed ($D_{50}$: 1.0 $\mu$m, $D_5$: 0.4 $\mu$m, $D_{95}$: 2.1 $\mu$m, F.D: 3.60 g/cm$^3$, content of $Na_2O$: 0.13%)

Sample 3: The alumina powder obtained by the same procedure as in Example 1 except that 320 cc of 1% aqueous solution of NaF were added to the dispersion in which aluminum hydroxide was dispersed instead of the aqueous solution of hydrochloric acid ($D_{50}$: 1.3 $\mu$m, $D_5$: 0.5 $\mu$m, $D_{95}$: 2.2 $\mu$m, F.D: 3.70 g/cm$^3$, content of $Na_2O$: 0.02%)

Sample 4: The alumina powder obtained in Example 6

Sample 5: The alumina powder obtained in Comparative Example 4

## Claims

1. A process for preparing an easily mono-dispersible alumina characterised by comprising:

(a) applying a mechanical impact to (i) an aluminium hydroxide having an average secondary particle diameter of about 10 $\mu$m or less produced by the Bayer's process and/or (ii) a transition alumina having an average secondary particle diameter of about 10 $\mu$m or less produced by the Bayer's process to obtain a pulverised powder, wherein the applied mechanical impact is such that the peak intensity of X-ray diffraction at (110) crystal face of the pulverised powder is reduced by about 5 % or more after the pulverisation;

(b) dispersing the pulverised powder into aqueous solution to form a slurry;

(c) adjusting the viscosity of the slurry to 100 to 1,000 centipoises;

(d) spray drying the viscosity-adjusted slurry to obtain a dried powder; and

(e) calcining the dried powder at 1,100° to 1,500° C.

2. A process according to claim 1, wherein the average secondary particle diameter of the aluminium hydroxide and/or a transition alumina is about 8 $\mu$m or less.

3. A process according to claim 2, wherein the average secondary particle diameter of the aluminium hydroxide and/or a transition alumina is about 5 $\mu$m or less

4. A process according to any one of claims 1 to 3, wherein the applied mechanical impact is such that the peak intensity of X-ray diffraction at (110) crystal face of the pulverised powder is reduced by about 10 % or more after the pulverisation.

5. A process according to any one of the preceding claims, wherein the calcination is carried out in the presence of a chlorine-containing substance.

6. A process according to claim 5, wherein the chlorine-containing substance is hydrochloric acid, chlorine gas, aluminium chloride, magnesium chloride or calcium chloride.

7. A process according to claim 6, wherein the chlorine-containing substance is hydrochloric acid.

8. A process according to any one of claims 5 to 7, wherein the chlorine-containing substance is added in an amount of 0.1 to 10 % in terms of the weight of chlorine based on the weight of alumina (dry basis) present in the aluminium hydroxide and/or transition alumina.

9. A process according to claim 9, wherein the chlorine-containing substance is added in an amount of 1 to 5 % in terms of the weight of chlorine based on the weight of alumina (dry basis) present in the aluminium hydroxide and/or transition alumina.

10. A process according to any one of the preceding claims, wherein a siliceous substance is added at the calcination.

11. A process according to claim 10, wherein the siliceous substance in silica stone, quartz, silica sand, chamotte, mulite, sillimanite, magnesium silicate or aluminium silicate.

12. A process according to claim 10 or claim 11, wherein the siliceous substance is added in an amount of

EP 0 281 265 B1

about 1 % or more in terms of the weight of silica based on the weight of alumina (dry basis).

13. A process according to claim 12, wherein the siliceous substance is added in an amount of 5 to 10 % in terms of the weight of silica based on the weight of alumina (dry basis).

14. A process according to any preceding claim, wherein the viscosity of the slurry is adjusted to 200 to 800 centipoises.

15. A process according to any preceding claim, wherein the viscosity of the slurry is adjusted by adding thereto at least one member selected from aqueous ammonia, polyvinyl alcohol, carboxymethyl cellulose, methyl cellulose, methyl methacrylate, calcium chloride, calcium carbonate, magnesium chloride and magnesium carbonate.

16. A process according to claim 15, wherein the viscosity of the slurry is adjusted by adding thereto aqueous ammonia and/or polyvinyl alcohol.

17. A process according to any preceding claim, wherein the spray drying is carried out with a rotary disk.

18. A process according to claim 17, wherein the average particle diameter of the spray-dried, granular powder is 20 to 200 $\mu$m.

**Revendications**

1. Procédé de préparation d'alumine facilement mono-dispersable, caractérisé en ce qu'il comprend les étapes de:
   (a) application d'un impact mécanique à (i) un hydroxyde d'aluminium ayant un diamètre moyen de particules secondaires d'environ 10 $\mu$m ou moins produit selon le procédé Bayer et/ou (ii) une alumine de transition ayant un diamètre moyen de particules secondaires d'environ 10 $\mu$m ou moins produit selon le procédé Bayer pour obtenir une poudre pulvérisée, dans lequel l'impact mécanique appliqué est tel que l'intensité du pic de diffraction aux rayons X à un plan (110) de cristal de la poudre pulvérisée est réduite à environ 5% ou plus après la pulvérisation;
   (b) dispersion de la poudre pulvérisée dans une solution aqueuse pour former une suspension;
   (c) ajustement de la viscosité de la suspension à une valeur de 100 à 1 000 centipoises;
   (d) séchage par pulvérisation de la suspension ajustée en viscosité pour obtenir une poudre séchée; et
   (e) calcination de la poudre séchée entre 1 100° et 1 500°C.

2. Procédé selon la revendication 1, dans lequel le diamètre moyen des particules secondaires de l'hydroxyde d'aluminium et/ou d'une alumine de transition est d'environ 8 $\mu$m ou moins.

3. Procédé selon la revendication 2, dans lequel le diamètre moyen des particules secondaires de l'hydroxyde d'aluminium et/ou d'une alumine de transition est d'environ 5 $\mu$m ou moins.

4. Procédé selon l'une quelconque des revendications 1 à 3, dans lequel l'impact mécanique appliqué est tel que l'intensité du pic de diffraction aux rayons X au plan (110) d'un cristal de la poudre pulvérisée est réduite à environ 10% ou plus après la pulvérisation.

5. Procédé selon l'une quelconque des revendications précédentes, dans lequel la calcination est réalisée en présence d'une substance contenant du chlore.

6. Procédé selon la revendication 5, dans lequel la substance contenant du chlore est l'acide chlorhydrique, le chlore gazeux, le chlorure d'aluminium, le chlorure de magnésium ou le chlorure de calcium.

7. Procédé selon la revendication 6, dans lequel la substance contenant du chlore est l'acide chlorhydrique.

8. Procédé selon l'une quelconque des revendications 5 à 7, dans lequel la substance contenant du chlore est ajoutée en une quantité de 0,1 à 10% exprimée en poids de chlore par rapport au poids

12

EP 0 281 265 B1

d'alumine (sur base sèche) présente dans l'hydroxyde d'aluminium et/ou dans l'alumine de transition.

**9.** Procédé selon la revendication 8, dans lequel la substance contenant du chlore est ajoutée en une quantité de 1 à 5% exprimée en poids de chlore par rapport au poids d'alumine (sur base sèche) présente dans l'hydroxyde d'aluminium et/ou dans l'alumine de transition.

**10.** Procédé selon l'une quelconque des revendications précédentes, dans lequel une substance siliceuse est ajoutée à la calcination.

**11.** Procédé selon la revendication 10, dans lequel la substance siliceuse est une pierre siliceuse, du quartz, du sable siliceux, de la chamotte, de la mulite, de la sillimanite, du silicate de magnésium ou du silicate d'aluminium.

**12.** Procédé selon la revendication 10 ou 11, dans lequel la substance siliceuse est ajoutée en une quantité d'environ 1% ou plus exprimée en poids de silice par rapport au poids d'alumine (sur base sèche).

**13.** Procédé selon la revendication 12, dans lequel la substance siliceuse est ajoutée en une quantité de 5 à 10% exprimée en poids de silice par rapport au poids d'alumine (base sèche).

**14.** Procédé selon l'une quelconque des revendications précédentes, dans lequel la viscosité de la suspension est ajustée à 200-800 centipoises.

**15.** Procédé selon l'une quelconque des revendications précédentes, dans lequel la viscosité de la suspension est ajustée en y ajoutant au moins un élément choisi parmi l'ammoniaque, l'alcool polyvinylique, la carboxyméthyl- cellulose, la méthyl- cellulose, le méthacrylate de méthyle, le chlorure de calcium, le carbonate de calcium, le chlorure de magnésium et le carbonate de magnésium.

**16.** Procédé selon la revendication 15, dans lequel la viscosité de la dispersion est ajustée en y ajoutant de l'ammoniaque et/ou de l'alcool polyvinylique.

**17.** Procédé selon l'une quelconque des revendications précédentes, dans lequel le séchage par pulvérisation est réalisé avec un disque rotatif.

**18.** Procédé selon la revendication 17, dans lequel le diamètre moyen des particules de la poudre granulée séchée par pulvérisation est de 20 à 200 $\mu$m.

**Patentansprüche**

**1.** Verfahren zur Herstellung von leicht monodispergierbarem Aluminiumoxid, **dadurch gekennzeichnet, daß es umfaßt:**
(a) Anwendung eines mechanischen Stoßes auf (i) Aluminiumhydroxid, das einen durchschnittlichen Sekundär-Teilchendurchmesser von ungefähr 10 $\mu$m oder weniger hat und nach dem Bayer-Verfahren hergestellt wurde, und/oder auf (ii) Übergangs-Aluminiumoxid, das einen durchschnittlichen Sekundär-Teilchendurchmesser von etwa 10 $\mu$m oder weniger hat und nach dem Bayer-Verfahren hergestellt wurde, zur Herstellung eines auf Staubfreiheit gemahlenen Pulvers; wobei der angewendete mechanische Stoß derart ist, daß nach dem Mahlen die Peakintensität bei der Röntgenstrahlbeugung an der Kristallebene (110) des gemahlenen Pulvers um etwa 5 % oder mehr abnimmt;
(b) Erzeugen einer Aufschlämmung durch Dispergieren des auf Staubfeinheit gemahlenen Pulvers in einer wäßrigen Lösung;
(c) Einstellen der Viskosität der Aufschlämmung auf 100 bis 1000 Centipoise;
(d) Sprühtrocknung der auf eine bestimmte Viskosität eingestellten Aufschlämmung zu einem getrockneten Pulver;
(e) Brennen des getrockneten Pulvers bei 1100 bis 1500° C.

**2.** Verfahren gemäß Anspruch 1, wobei der durchschnittliche Sekundär-Teilchendurchmesser des Aluminiumhydroxids und/oder des Übergangs-Aluminiumoxids etwa 8 $\mu$m oder weniger beträgt.

13

**3.** Verfahren gemäß Anspruch 2, wobei der durchschnittliche Sekundär-Teilchendurchmesser des Aluminiumhydroxids und/oder des Übergangs-Aluminiumoxids etwa 5 $\mu$m oder weniger beträgt.

**4.** Verfahren gemäß einem der Ansprüche 1 bis 3, wobei der angewandte mechanische Stoß derart ist, daß nach dem Mahlen die Peakintensität bei der Röntgenstrahlbeugung an der Kristallebene (110) des auf Staubfeinheit gemahlenen Pulvers um etwa 10 % oder mehr abnimmt.

**5.** Verfahren gemäß einem vorhergehenden Anspruch, wobei das Brennen in Gegenwart eines chlorhaltigen Stoffs durchgeführt wird.

**6.** Verfahren gemäß Anspruch 5, wobei der chlorhaltige Stoff Salzsäure, Chlorgas, Aluminiumchlorid, Magnesiumchlorid oder Calciumchlorid ist.

**7.** Verfahren gemäß Anspruch 6, wobei der chlorhaltige Stoff Salzsäure ist.

**8.** Verfahren gemäß einem der Ansprüche 5 bis 7, wobei der chlorhaltige Stoff in einer Menge von 0,1 bis 10 %, ausgedrückt als Masse des Chlors, und bezogen auf die Masse des (trockenen) Aluminiumoxids, das in dem Aluminiumhydroxid und/oder dem Übergangs-Aluminiumoxid vorhanden ist, hinzugefügt wird.

**9.** Verfahren gemäß Anspruch 8, wobei der chlorhaltige Stoff in einer Menge von 1 bis 5 %, ausgedrückt als Masse des Chlors, bezogen auf die Masse des (trockenen) Aluminiumoxids, das in dem Aluminiumhydroxid und/oder in dem Übergangs-Aluminiumoxid vorhanden ist, hinzugefügt wird.

**10.** Verfahren gemäß einem vorhergehenden Anspruch, wobei ein kieselsäurehaltiger Stoff beim Brennen hinzugefügt wird.

**11.** Verfahren gemäß Anspruch 10, wobei der kieselsäurehaltige Stoff Silikastein, Quarz, Quarzsand, Schamotte, Mullit, Sillimanit, Magnesiumsilikat oder Aluminiumsilikat ist.

**12.** Verfahren gemäß Anspruch 10 oder 11, wobei die kieselsäurehaltige Substanz in einer Menge von etwa 1 % oder mehr, ausgedrückt als Masse des Siliciumdioxids, bezogen auf die Masse des (trockenen) Aluminiumoxids, hinzugefügt wird.

**13.** Verfahren gemäß Anspruch 12, wobei der kieselsäurehaltige Stoff in einer Menge von 5 bis 10 %, ausgedrückt als Masse des Siliciumdioxids, bezogen auf die Masse des (trockenen) Aluminiumoxids, hinzugefügt wird.

**14.** Verfahren gemäß einem vorhergehenden Anspruch, wobei die Viskosität der Aufschlämmung auf 200 bis 800 Centipoise eingestellt wird.

**15.** Verfahren gemäß einem vorhergehenden Anspruch, wobei die Viskosität der Aufschlämmung durch Hinzufügen wenigstens eines der folgenden Stoffe eingestellt wird: Wäßrige Ammoniaklösung, Polyvinylalkohol, Carboxymethylcellulose, Methylcellulose, Methylmethacrylat, Calciumchlorid, Calciumcarbonat, Magnesiumchlorid oder Magnesiumcarbonat.

**16.** Verfahren gemäß Anspruch 15, wobei die Viskosität der Aufschlämmung durch Hinzufügen von wäßriger Ammoniaklösung und/oder Polyvinylalkohol eingestellt wird.

**17.** Verfahren gemäß einem der vorhergehenden Ansprüche, wobei die Sprühtrocknung mit einer rotierenden Scheibe durchgeführt wird.

**18.** Verfahren gemäß Anspruch 17, wobei der durchschnittliche Teilchendurchmesser des sprühgetrockneten, gekörnten Pulvers 20 bis 200 $\mu$m beträgt.

14

F I G. I

F I G. 2

$\dfrac{2\,\mu\,m}{\vdash\text{--}\dashv}$ X 5000

# F I G. 3

F I G. 4

$2\,\mu\text{m}$
$\longmapsto$  X 5000

# F I G. 5

F I G. 6

$2 \mu m$
X 5000

# F I G. 7

F I G. 8

2 μm
——— X 5000

# F I G. 9

F I G. IO

2 μm
———  X 5000

# F I G. 11